# EUROPÄISCHE PATENTSCHRIFT

(11) **EP 3 535 788 B1**
(45) Veröffentlichungstag und Bekanntmachung des Hinweises auf die Patenterteilung: **29.04.2020**
(21) Anmeldenummer: 17771988.7
(22) Anmeldetag: 30.08.2017
(51) Int. Cl.: H01M 2/10, H01M 2/20, H01M 10/643, H01M 10/6555, H01M 10/613

(54) **PLATINE ZUR ELEKTRISCH GESICHERTEN VERBINDUNG VON BATTERIEZELLEN UND BATTERIE**
CIRCUIT BOARD FOR THE ELECTRICALLY FUSE-PROTECTED CONNECTION OF BATTERY CELLS AND BATTERY
CARTE À CIRCUIT IMPRIMÉ DESTINÉE À ASSURER UNE CONNEXION ÉLECTRIQUE SÉCURISÉE ENTRE DES ÉLÉMENTS DE BATTERIE ET BATTERIE

(30) Priorität: 02.11.2016 DE 102016120838
(43) Veröffentlichungstag der Anmeldung: 11.09.2019
(73) Patentinhaber: E-Seven Systems Technology Management Ltd, Valletta, VLT 1455 (MT)
(72) Erfinder: KRÄMER, Thomas, St. Julian's, STJ 3140 (MT)
(74) Vertreter: Cohausz & Florack
(86) Internationale Anmeldenummer: PCT/EP2017/071731
(87) Internationale Veröffentlichungsnummer: WO 2018/082823

(56) Entgegenhaltungen:
- EP-A2- 2 343 752
- WO-A1-2015/164593
- CN-A- 105 552 289
- US-A1- 2013 122 341
- US-A1- 2013 136 955

## Beschreibung

Die vorliegende Erfindung betrifft eine Platine zur elektrisch gesicherten Verbindung von Batteriezellen, wobei die Platine teilweise aus einem nicht elektrisch leitfähigen Material ausgebildet ist, wobei die Platine auf einer ersten Seite mindestens zwei elektrisch und thermisch leitfähige Kontaktierungsabschnitte und auf einer zweiten Seite mindestens einen elektrisch und thermisch leitfähigen Kontaktierungsabschnitt aufweist, wobei das nicht elektrisch leitfähige Material flächig ausgebildet und zwischen den Kontaktierungsabschnitten angeordnet ist, wobei auf der ersten Seite ein elektrisch und thermisch leitfähiger Verbindungsabschnitt angeordnet ist, der die Kontaktierungsabschnitte auf der ersten Seite elektrisch und thermisch leitfähig miteinander verbindet, und wobei den Kontaktierungsabschnitten auf der ersten Seite jeweils eine elektrische Sicherung zugeordnet ist und der Verbindungsabschnitt mit jedem Kontaktierungsabschnitt über eine diesem Kontaktierungsabschnitt zugeordnete elektrische Sicherung verbunden ist.

Aus dem Stand der Technik ist es bekannt, dass innerhalb einer Batterie Batteriezellen miteinander über eine Platine miteinander elektrisch und thermisch leitfähig verbunden werden können. Eine solche Platine kann dazu geeignet sein, mehrere Batteriezellen in Reihe und parallel miteinander elektrisch und thermisch leitfähig zu verbinden. Dies erlaubt es, einen elektrischen Strom und einen Wärmestrom möglichst gleichmäßig innerhalb der Batterie zu verteilen. Eine solche Platine kann mindestens eine Sicherung aufweisen. Somit lassen sich die Batteriezellen gegeneinander mittels der Platine elektrisch sichern. Dies ist insbesondere dann vorteilhaft, wenn ein Widerstand einer Batteriezelle aufgrund eines Fehlers zusammenbricht, sodass ein zu hoher elektrischer Strom durch diese Batteriezelle fließt. In diesem Fall wird eine elektrische Sicherung ausgelöst, die einem Kontaktierungsabschnitt der Platine zugeordnet ist, der mit einem positiven oder an einem negativen Endanschluss der Batterie elektrisch und thermisch leitfähig verbunden ist. Dadurch wird die fehlerhafte Batteriezelle elektrisch isoliert und weitere Batteriezellen innerhalb der Batterie werden vor einem überhöhten elektrischen Strom geschützt.

Die aus dem Stand der Technik bekannten Platinen sind so ausgeführt, dass sie dazu geeignet sind, Batteriezellen gegeneinander elektrisch zu sichern, die mit Kontaktierungsabschnitten auf einer Seite der Platine elektrisch und thermisch leitfähig verbunden sind. Da eine Sicherung der Kontaktierungsabschnitte nur gegenüber dem Verbindungsabschnitt auf der ersten Seite der Platine erfolgt, ist eine elektrische Sicherung der Kontaktierungsabschnitte auf der ersten Seite der Platine gegenüber den Kontaktierungsabschnitten auf der zweiten Seite der Platine nicht gewährleistet.

Die US 2013/136955 A1 offenbart eine Platine aus elektrisch leitfähigem Material zur elektrisch gesicherten Verbindung von Batteriezellen in einer Batterie.

Die CN 105 552 289 A offenbart eine Batterie, worin die Batteriezellen über ein Netzwerk von Zellverbindern umfassend elektrische Sicherungen verbunden sind.

Der vorliegenden Erfindung liegt deshalb die Aufgabe zugrunde, eine Platine bereitzustellen, die eine elektrische Sicherung der Kontaktierungsabschnitte auf der ersten Seite der Platine gegenüber den Kontaktierungsabschnitten auf der zweiten Seite der Platine bereitstellt. Die Aufgabe wird gelöst durch die eingangs beschriebene Platine, wobei erfindungsgemäß der Verbindungsabschnitt mit dem mindestens einen Kontaktierungsabschnitt auf der zweiten Seite der Platine durch das nichtleitende Material der Platine hindurch elektrisch und thermisch leitfähig über mindestens ein elektrisch und thermisch leitfähiges Durchführungselement verbunden ist, sodass jeder Kontaktierungsabschnitt auf der ersten Seite der Platine gegenüber jedem anderen Kontaktierungsabschnitt auf der ersten Seite der Platine und gegenüber jedem Kontaktierungsabschnitt auf der zweiten Seite der Platine durch mindestens eine elektrische Sicherung gesichert ist. Folglich ist eine elektrische Sicherung aller Kontaktierungsabschnitte gegeneinander gewährleistet. Aufgrund der erfindungsgemäßen Anordnung wird es vermieden, dass eine unnötig große Anzahl an Sicherungen auf der Platine vorgesehen werden muss. So ist es bei der erfindungsgemäßen Anordnung insbesondere nicht notwendig, dass elektrisch und thermisch leitfähige Durchführungselemente, die Kontaktierungsabschnitte der ersten Seite und der zweiten Seite miteinander elektrisch und thermisch leitfähig verbinden, als Sicherungen dimensioniert werden müssen. Das nicht elektrisch leitfähige Material ist erfindungsgemäß flächig ausgebildet und zwischen den Kontaktierungsabschnitten angeordnet. Erfindungsgemäß kann das nicht elektrisch leitfähige Material aus einem gängigen Substratmaterial ausgebildet sein, das bei Platinen beziehungsweise Leiterplatten Verwendung findet. Die elektrisch und thermisch leitfähigen Kontaktierungsabschnitte, der elektrisch und thermisch leitfähige Verbindungsabschnitt sowie die elektrisch und thermisch leitfähigen Durchführungselemente sind vorzugsweise aus einem Metall ausgeführt. Ganz besonders bevorzugt handelt es sich dabei um Kupfer. Dies ist vorteilhaft, denn Kupfer weist eine besonders gute elektrische und thermische Leitfähigkeit auf. Die Platine kann unter Anwendung dem Fachmann bekannter Fertigungsverfahren für Leiterplatten kostengünstig hergestellt werden.

Gemäß einer besonderen Ausführungsform der Erfindung ist jeder Kontaktierungsabschnitt auf der ersten Seite der Platine über einen nicht elektrisch leitfähigen Abschnitt auf der ersten Seite der Platine von dem Verbindungsabschnitt getrennt und durch eine durch den nicht elektrisch leitfähigen Abschnitt hindurchgeführte Leiterbahn mit dem Verbindungsabschnitt verbunden, die so dimensioniert ist, dass die Leiterbahn als die dem jeweiligen Kontaktierungsabschnitt zugeordnete Sicherung dient. Dabei kann der nicht elektrisch leitfähige Abschnitt erfindungsgemäß kreisförmig um den Kontaktierungsabschnitt angeordnet sein, wobei durch diesen die Leiterbahn von dem Kontaktierungsabschnitt zu dem Verbindungsabschnitt hindurchgeführt ist. Durch die Sicherung wird es vermieden, dass ein zu hoher elektrischer in einen Kontaktierungsbereich hineingeführt wird oder aus diesem hinausgeführt wird.

Die Sicherung wird vorzugsweise durch ein elektrisch und thermisch leitfähiges Material gebildet, das so dimensioniert ist, dass es bei einem überhöhten elektrischen Strom durchbrennt bzw. beschädigt wird. Damit die Sicherung bei einem überhöhten elektrischen Strom durch einen Kontaktierungsabschnitt auslöst, muss das elektrisch und thermisch leitfähige Material der Sicherung einen ausreichend geringen Leiterquerschnitt aufweisen. Erfindungsgemäß sollte die Sicherung so dimensioniert werden, dass sie einen maximalen Leiterquerschnitt aufweist, der dazu geeignet ist, eine maximale thermische Leitfähigkeit der Sicherung zu gewährleisten, wobei der maximale Leiterquerschnitt durch denjenigen maximalen Leiterquerschnitt begrenzt wird, der eine Auslösung der Sicherung im Fehlerfall einer Batteriezelle gewährleistet.

Vorzugsweise ist der Verbindungsabschnitt als eine flächige, elektrisch und thermisch leitfähige Schicht auf der ersten Seite der Platine ausgebildet. Wenn der Verbindungsabschnitt als eine flächige Schicht ausgebildet ist, dann weist er eine sehr hohe elektrische und thermische Leitfähigkeit auf und ist somit besonders gut dafür geeignet, einen elektrischen und einen thermischen Strom zwischen den Kontaktierungsabschnitten auf der ersten Seite der Platine zu verteilen. Alternativ kann der Verbindungsabschnitt als ein Verbund von Leiterbahnen ausgebildet sein, die miteinander elektrisch und thermisch leitfähig verbunden sind. Ein Verbund von Leiterbahnen bietet den Vorteil, dass dabei weniger elektrisch und thermisch leitfähiges Material für den Verbindungsabschnitt aufgewandt werden muss. Es verbleibt dabei auf der Platine zusätzlicher Platz für sonstige Komponenten, die auf dem nichtleitenden Material angeordnet werden können.

Ist der Verbindungsabschnitt als ein Verbund von Leiterbahnen ausgebildet, die miteinander elektrisch und thermisch leitfähig verbunden sind, dann ist bevorzugt jede Leiterbahn als eine einen Kontaktierungsabschnitt umschließende, geschlossene Leiterschleife ausgebildet. Vorzugsweise ist die Leiterschleife kreisförmig ausgebildet. Es ist aber auch möglich, dass die Leiterschleife eine von einer Kreisform abweichende Form wie beispielsweise eine elliptische Form, eine rechteckige Form oder eine Knochenform aufweist.

Es ist vorteilhaft, wenn der mindestens eine Kontaktierungsabschnitt auf der zweiten Seite der Platine in einem flächigen, elektrisch und thermisch leitfähigen Verbindungs- und Kontaktierungsbereich auf der zweiten Seite der Platine angeordnet ist. Wenn der Verbindungs- und Kontaktierungsbereich auf der zweiten Seite der Platine als eine flächige Schicht ausgebildet ist, dann weist er eine sehr große elektrische und thermische Leitfähigkeit auf und ist somit besonders gut dafür geeignet, einen elektrischen und einen thermischen Strom zwischen den Kontaktierungsabschnitten auf der zweiten Seite der Platine zu verteilen. Der Verbindungs- und Kontaktierungsbereich kann jedoch auch abweichend ausgebildet sein. So sind auch Ausführungsformen denkbar, bei denen die zweite Seite der Platine einen Verbindungsabschnitt und Kontaktierungsbereiche aufweist, die spiegelbildlich zu dem Verbindungsabschnitt und den Kontaktierungsbereichen auf der ersten Seite der Platine ausgebildet sind. Dabei kann erfindungsgemäß auch jedem Kontaktierungsabschnitt auf der zweiten Seite der Platine eine Sicherung zugeordnet sein. Jedoch sind Sicherungen an dem mindestens einen Kontaktierungsabschnitt auf der zweiten Seite der Platine nicht unbedingt notwendig, da sich herausgestellt hat, dass bei einem Fehler einer Batteriezelle lediglich auf der ersten Seite angeordnete Sicherungen ausreichend sind, um mit der Platine elektrisch und thermisch verbundene weitere Batteriezellen zu schützen. Aus diesem Grund wird eine Ausführungsform der Erfindung mit einem flächigen Verbindungs- und Kontaktierungsbereich bevorzugt, in dem Kontaktierungsabschnitte nicht in besonderer Weise von dem Verbindungs- und Kontaktierungsbereich getrennt sind.

Gemäß einer besonderen Ausführungsform der Erfindung ist der Verbindungsabschnitt auf der ersten Seite mit dem Verbindungs- und Kontaktierungsbereich auf der zweiten Seite durch das elektrisch nicht leitfähige Material hindurch verbunden. Somit ist es nicht notwendig, dass der Verbindungsabschnitt auf der ersten Seite der Platine unmittelbar mit einem Kontaktierungsabschnitt auf der zweiten Seite elektrisch und thermisch leitfähig über ein Kontaktierungselement verbunden ist. Stattdessen kann eine elektrisch und thermisch leitfähige Verbindung zwischen dem Verbindungsabschnitt auf der ersten Seite und dem Verbindungs- und Kontaktierungsbereich auf der zweiten Seite bestehen. Dabei kann ein elektrischer und ein thermischer Strom über den Verbindungs- und Kontaktierungsbereich auf den mindestens einen Kontaktierungsabschnitt auf der zweiten Seite der Platine geführt werden.

Gemäß einer weiteren Ausführungsform der Erfindung sind um jeden Kontaktierungsabschnitt auf der ersten Seite der Platine mehrere Durchführungselemente gleichmäßig von dem Kontaktierungsabschnitt beabstandet angeordnet. Es hat sich herausgestellt, dass durch die Bereitstellung mehrerer Durchführungselemente ein elektrischer und thermischer Strom ganz besonders gut von der ersten Seite der Platine zur zweiten Seite der Platine geleitet werden kann. Dabei hat es sich als vorteilhaft herausgestellt, wenn die Durchführungselemente in der Nähe der Kontaktierungsbereich in dem Verbindungsabschnitt auf der ersten Seite der Platine angeordnet sind. Ganz besonders gut geeignet ist hierbei eine kreisförmige Anordnung der Durchführungselemente um die Kontaktierungsbereiche herum. Eine Anzahl von sechs bis zwölf Durchführungselementen hat sich als besonders vorteilhaft herausgestellt.

Erfindungsgemäß kann das mindestens eine Durchführungselement auf einem Innenrand einer Durchführungsaussparung angeordnet sein, die das nicht leitfähige Material durchläuft. Die Durchführungsaussparung kann kreisförmig ausgeführt sein oder eine sonstige Form aufweisen. Das Durchführungselement ist dabei vorzugsweise eine Metallschicht, die erfindungsgemäß auf den Innenrand der Durchführungsaussparung aufgedampft oder aufgedruckt sein kann. Die Durchführungsaussparung kann in das nicht leitfähige Material gebohrt oder gestanzt sein. Das Durchführungselement kann jedoch auch abweichend ausgeführt sein und muss insbesondere nicht notwendigerweise entlang einer Durchführungsaussparung durch das nicht leitfähige Material hindurchgeführt sein. So kann das Durchführungselement gemäß einer möglichen Ausführungsform als ein Nietelement in das nicht leitfähige Material eingebracht sein.

Erfindungsgemäß können die Kontaktierungsabschnitte auf der ersten Seite und/oder auf der zweiten Seite der Platine gegenüber einer Ebene, die durch eine Oberfläche der ersten Seite beziehungsweise der zweiten Seite der Platine definiert wird, erhaben ausgebildet sein. Ein erhabener Kontaktierungsabschnitt weist bevorzugt eine flache Oberfläche oder eine Oberfläche mit einer Reliefform auf, die einer Form eines Endanschlusses einer Batteriezelle angepasst ist. Hierdurch wird eine Kontaktierung des Kontaktierungsabschnitts mit einer Batteriezelle verbessert. Bevorzugt ist der Kontaktierungsabschnitt solchermaßen ausgeführt, dass er zwischen 0,1 mm und 0,3 mm aus der Ebene herausragt, die durch die Oberfläche der ersten Seite beziehungsweise die Oberfläche der zweiten Seite der Platine definiert wird.

Es ist vorteilhaft, wenn die Kontaktierungsabschnitte erhabene Kontaktierungspunkte aufweisen. Die Kontaktierungspunkte können dazu dienen, eine wohldefinierte elektrisch und thermisch leitfähige Verbindung zwischen den Kontaktierungsabschnitten und an diesen angrenzenden Batteriezellen herzustellen.

Vorzugsweise ist die Platine flexibel ausgebildet. Hierzu kann die Platine aus flexiblen und/oder elastischen Materialien ausgebildet sein. Beispielsweise kann das nicht elektrisch leitfähige Material aus einem elastischen Polymer verwendet werden. Das nicht elektrisch leitfähige Material aus einem Polyimid gebildet sein, bei dem es sich bevorzugt um Kapton handelt. Kapton ist chemisch sehr beständig und weist eine sehr hohe Durchschlagfeldstärke auf. Das auf der Platine aufgebrachte elektrisch und thermisch leitfähige Material, aus dem die Kontaktierungsabschnitte, der Verbindungsabschnitt auf der ersten Seite der Platine, der Verbindungs- und Kontaktierungsbereich auf der zweiten Seite der Platine und das mindestens eine Durchführungselement bestehen, weist eine ausreichende Flexibilität auf, wenn es sich um ein Metall handelt. Jedoch sollte die Menge des aufgebrachten Metalls so dimensioniert sein, dass es beim Verbiegen der Platine nicht beschädigt wird, wodurch Abschnitte der Platine ihre elektrische und thermische Leitfähigkeit einbüßen oder verlieren könnten.

Gemäß einer weiteren Ausführungsform der Erfindung weist die Platine in dem nicht leitfähigen Material einen flächig ausgebildeten Kern aus einem elektrisch und thermisch leitfähigen Material auf, wobei sich das Durchführungselement durch den Kern erstreckt und gegenüber dem Kern elektrisch isoliert ist, sodass eine elektrisch und thermisch leitfähige Verbindung der Kontaktierungsabschnitte auf der ersten Seite mit den Kontaktierungsabschnitten auf der zweiten Seite durch das Durchführungselement hergestellt wird und ein Wärmestrom durch den Kern aufgenommen und aus der Platine abgeführt werden kann. Ist die Platine in einer Batterie zwischen Batteriezellen vorgesehen, so kann nicht nur ein elektrischer Strom und ein Wärmestrom über die Batterie verteilt werden, sondern auch durch den Kern aufgenommen werden. Hierdurch bietet sich die Möglichkeit, den Wärmestrom auch aus der Platine und damit auch aus der Zellanordnung herauszuführen. Der Kern kann erfindungsgemäß aus einer Kante der Platine herausgeführt sein oder an dieser freiliegen. Es ist ferner möglich, das der Kern an mehreren Kanten der Platine herausgeführt ist oder an diesen freiliegt. Ist der Kern aus der Platine herausgeführt, so kann er in dem Bereich, in dem er aus der Platine herausgeführt ist, ein thermisch leitfähiges Wärmeabfuhrelement bilden. Alternativ kann der Kern mit einem thermisch leitfähigen Wärmeabfuhrelement elektrisch und thermisch leitfähig verbindbar sein. Das Wärmeabfuhrelement kann mit einer Wärmesenke verbunden sein, sodass große Wärmeströme aus der Platine über den Kern abgeführt werden können.

Besonders bevorzugt ist in der Platine mindestens eine Kühlleitung vorgesehen, um die Platine zu kühlen. Dabei kann die Kühlleitung die Platine in einer Ebene, die durch die Platine gebildet wird, durchlaufen. Es können erfindungsgemäß mehrere Kühlleitungen in der Platine vorgesehen sein. Die Kühlleitung kann erfindungsgemäß den Kern der Platine durchlaufen.

Vorzugsweise ist an dem Verbund von Leiterbahnen beziehungsweise an der flächigen, elektrisch und thermisch leitfähigen Schicht auf der ersten Seite der Platine und/oder an dem Verbindungs- und Kontaktierungsbereich auf der zweiten Seite der Platine mindestens ein zusätzlicher Kontakt vorgesehen. Hierbei handelt es sich um einen Kontakt, der nicht zur Kontaktierung durch eine Batteriezelle vorgesehen ist. An einen solchen Kontakt kann ein Batteriemanagementsystem angeschlossen werden, sodass beispielsweise eine an der Platine anliegende Spannung gemessen werden kann.

Vorzugsweise ist an der Platine mindestens ein weiterer Kontakt vorgesehen. Der weitere Kontakt kann beispielsweise mit einer Messvorrichtung verbunden sein, die auf der Platine aufgebracht oder in der Platine vorgesehen ist. Hierbei kann es sich um einen Temperaturfühler handeln. Erfindungsgemäß kann der Kontakt auch zum Anschluss eines Bussystems dienen, über das auf der Platine vorgesehene Messvorrichtungen ausgelesen und/oder angesteuert werden können.

Die vorliegende Erfindung betrifft weiter eine Batterie mit einer Zellanordnung, wobei die Zellanordnung mehrere Batteriezellen aufweist, die in einer elektrischen und thermischen Reihen- und Parallelschaltung elektrisch leitfähig miteinander verbunden sind, wobei die Zellanordnung mindestens zwei Batterieabschnitte aufweist und jeder Batterieabschnitt aus mehreren elektrisch parallel geschalteten Batteriezellen besteht, wobei jede Batteriezelle einen positiven und einen negativen Endanschluss aufweist, wobei die Batteriezellen der Batterieabschnitte so ausgerichtet sind, dass sämtliche positiven Endanschlüsse der Batteriezellen des jeweiligen Batterieabschnitts in einer gemeinsamen positiven Kontaktierungsebene liegen und dass sämtliche negativen Endanschlüsse der Batteriezellen des jeweiligen Batterieabschnitts in einer gemeinsamen negativen Kontaktierungsebene liegen, wobei die Batterieabschnitte benachbart zueinander angeordnet sind, wobei jeweils eine positive Kontaktierungsebene eines Batterieabschnitts einer negativen Kontaktierungsebene eines benachbart angeordneten Batterieabschnitts zugewandt ist und wobei die Kontaktierungsebenen parallel zueinander ausgerichtet sind, wobei zwischen mindestens zwei aufeinanderfolgenden Batterieabschnitten eine zumindest teilweise elektrisch und thermisch leitfähige Verbindungsplatte mit einer ersten Seite und einer zweiten Seite angeordnet ist, die auf der ersten Seite und auf der zweiten Seite jeweils mindestens einen elektrisch und thermisch leitfähigen Kontaktierungsabschnitt aufweist, wobei die der ersten Seite dieser Verbindungsplatte zugewandten Endanschlüsse elektrisch und thermisch leitfähig mit dem mindestens einen Kontaktierungsabschnitt dieser ersten Seite verbunden sind und wobei die der zweiten Seite dieser Verbindungsplatte zugewandten Endanschlüsse elektrisch und thermisch leitfähig mit dem mindestens einen Kontaktierungsabschnitt dieser zweiten Seite verbunden sind, wobei die mit dem mindestens einen Kontaktierungsabschnitt der ersten Seite verbundenen Endanschlüsse untereinander über die Verbindungsplatte elektrisch und thermisch leitfähig miteinander verbunden sind, wobei die mit dem mindestens einen Kontaktierungsabschnitt der zweiten Seite verbundenen Endanschlüsse untereinander über die Verbindungsplatte elektrisch und thermisch leitfähig miteinander verbunden sind, und wobei die mit dem mindestens einen Kontaktierungsabschnitt der ersten Seite verbundenen Endanschlüsse elektrisch und thermisch leitfähig mit den mit dem mindestens einen Kontaktierungsabschnitt der zweiten Seite verbundenen Endanschlüssen über die Verbindungsplatte verbunden sind. Die Batterie weist erfindungsgemäß als Verbindungsplatte eine Platine auf, die wie vorangehend beschrieben ausgebildet ist.

In der Batterie befinden sich jeweils mehrere Batteriezellen in einem Batterieabschnitt. Vorzugsweise handelt es sich bei den Batteriezellen um Rundzellen. Bei diesen hat es sich herausgestellt, dass sie besonders widerstandsfähig gegenüber mechanischen Belastungen sind. Die Batteriezellen weisen positive und negative Endanschlüsse auf, wobei die positiven Endanschlüsse in einer positiven Kontaktierungsebene liegen und die negativen Endanschlüsse in einer negativen Kontaktierungsebene liegen. Unter einem positiven Endanschluss beziehungsweise einem negativen Endanschluss ist ein Pluspol beziehungsweise ein Minuspol einer Batteriezelle zu verstehen. Die positive und die negative Kontaktierungsebene sind parallel zueinander ausgerichtet.

Die Kontaktierungsabschnitte der Platine sind elektrisch und thermisch leitfähig mit den positiven Endanschlüssen und mit den negativen Endanschlüssen der Batteriezellen verbunden. Die positiven Endanschlüsse werden miteinander über die Platine elektrisch und thermisch leitfähig verbunden. Auch die negativen Endanschlüsse werden miteinander über die Platine elektrisch und thermisch leitfähig verbunden. Außerdem sind die positiven Endanschlüsse mit den negativen Endanschlüssen über die Platine elektrisch und thermisch leitfähig miteinander verbunden. Der Vorteil einer solchen Anordnung besteht darin, dass ein elektrischer Strom und ein thermischer Strom mittels der Platine über die gesamte Zellanordnung verteilt werden können. Durch die Platine wird erfindungsgemäß sichergestellt, dass die Batteriezellen innerhalb der Zellanordnung gegenüber einander elektrisch gesichert sind.

Erfindungsgemäß können die Batteriezellen so angeordnet sein, dass erste Endanschlüsse einer Kontaktierungsebene eines ersten Batterieabschnitts unmittelbar gegenüberliegend zu zweiten Endanschlüssen einer Kontaktierungsebene eines zweiten Batterieabschnitts angeordnet sind, sodass sämtliche Batteriezellen eines Batterieabschnitts fluchtend mit den Batteriezellen eines benachbarten Batterieabschnitts angeordnet sind. Somit sind Gruppen von Batteriezellen mehrerer Batterieabschnitte reihig zueinander angeordnet.

Vorzugsweise liegen positive Endanschlüsse eines Batterieabschnitts unmittelbar an negativen Endanschlüssen eines benachbarten Batterieabschnitts elektrisch und thermisch leitfähig an. Demgemäß sind zwei oder mehr Batteriezellen in Reihe geschaltet, ohne dass dabei unmittelbar benachbarte Batteriezellen durch eine Platine voneinander separiert sind. Ein solcher Aufbau kann vorgesehen werden, wenn eine ausreichende Verteilung eines elektrischen Stroms und eines Wärmestroms innerhalb einer Batterie auch mit einer geringen Zahl von Platinen innerhalb der Zellanordnung möglich ist. Ob dies der Fall ist, wird maßgeblich durch kapazitive und weitere Eigenschaften der Batteriezellen bestimmt.

Es ist bevorzugt, wenn durch die in den beiden äußeren Kontaktierungsebenen der Batterie liegenden Endanschlüsse ein Batteriepluspol und ein Batterieminuspol definiert werden, wobei an dem Batteriepluspol und dem Batterieminuspol jeweils eine Druckplatte angeordnet ist, wobei die Druckplatten über Zugelemente miteinander verbunden sind und dadurch die an der mindestens einen Platine anliegenden Batteriezellen an die mindestens eine Platine andrücken.

Die Komponenten innerhalb der Zellanordnung werden hierdurch miteinander verpresst. Dabei üben die Druckplatten jeweils eine Anpresskraft auf die Batteriezellen aus. Die Druckplatte kann erfindungsgemäß die Anpresskraft an dem Batteriepluspol beziehungsweise an dem Batterieminuspol direkt auf die Batteriezellen ausüben. So kann die Druckplatte unmittelbar an positiven oder an negativen Endanschlüssen der Batteriezellen anliegen. Die Druckplatte kann die Anpresskraft an dem Batteriepluspol beziehungsweise an dem Batterieminuspol alternativ jedoch auch indirekt auf die Batteriezellen ausüben. So kann zwischen der Druckplatte und den Batteriezellen erfindungsgemäß eine zusätzliche Schicht vorgesehen sein. Diese zusätzliche Schicht kann elektrisch nichtleitend und/oder elastisch ausgeführt sein.

Erfindungsgemäß können die Druckplatten flächig ausgebildet sein, es sind jedoch auch abweichende Bauformen möglich. Die Zugelemente sind jeweils mit den Druckplatten verbunden. Dabei sind die Zugelemente solchermaßen zwischen den Druckplatten verspannt, dass sie eine Zugkraft auf die Druckplatten ausüben. Bedingt durch die Zugkraft können die Druckplatten wiederum die bereits beschriebene Anpresskraft auf die Zellanordnung ausüben. Die Anpresskraft wird über alle Batterieabschnitte der Zellanordnung hinweg innerhalb der Batterie übertragen. Dadurch werden die Batteriezellen besonders gut mit der mindestens einen Platine innerhalb der Zellanordnung kontaktiert, denn durch eine hohe Anpresskraft kann eine Fläche zwischen zwei einander elektrisch und/oder thermisch kontaktierenden Elementen vergrößert werden.

Die Zugelemente können als Stangen, als Rohre oder als sonstige länglich ausgebildete Elemente ausgebildet sein. Vorzugsweise sind die Stangen aus einem Metall, ganz besonders aus Stahl ausgeführt. Die Stangen können alternativ jedoch auch aus einem besonders stabilen Kunststoff oder aus einem Verbundmaterial ausgeführt sein.

Es ist vorteilhaft, wenn die Druckplatten als Metallplatten ausgebildet sind. Metallplatten sind ausreichend stabil, sodass über sie eine Zugkraft von den Zugelementen auf die Zellanordnung übertragen werden kann. Die Metallplatten können dabei in Abhängigkeit von einer vorgesehenen Zugkraft unterschiedlich dick ausgeführt sein. Wird eine hohe Zugkraft vorgesehen, so muss die Metallplatte besonders dick ausgeführt sein. Vorzugsweise ist die Metallplatte 3 bis 20 mm dick ausgeführt, ganz besonders bevorzugt ist sie 5 mm dick ausgeführt. Die Metallplatten können erfindungsgemäß aus Kupfer, aus Aluminium oder aus einem sonstigen sehr gut wärmeleitfähigen Material ausgebildet sein. Alternativ ist es möglich, die Druckplatten nicht aus Metall auszuführen. So können die Druckplatten erfindungsgemäß aus einem harten Kunststoff ausgeführt sein.

Bevorzugt sind die Zugelemente durch Zugelementaussparungen in den Druckplatten hindurchgeführt, wobei die Zugelemente in den Zugelementaussparungen verschraubt sind und/oder mit Hilfe von Muttern an den Druckplatten verschraubt sind. Eine Schraubverbindung erlaubt es, eine durch die Zugelemente auf die Druckplatten auszuübende Zugkraft genau einzustellen. Es sind erfindungsgemäß jedoch auch sonstige Festlegungsmittel verwendbar, um die Zugelemente an den Zugelementaussparungen so festzulegen, dass die Zugelemente eine Zugkraft auf die Druckplatten ausüben.

Die Zellanordnung kann erfindungsgemäß von einem thermisch leitfähigen Gehäuse umschlossen sein. Da das Gehäuse thermisch leitfähig ist, eignet es sich dazu, als eine Wärmesenke Wärme aus der Zellanordnung aufzunehmen und optional an weitere Wärmesenken zu übertragen, mit denen es thermisch leitfähig verbunden ist. Das vorhergehend beschriebene Wärmeabfuhrelement kann mit dem Gehäuse thermisch leitfähig verbunden sein. Das Gehäuse ist vorzugsweise aus einem Metall gefertigt, besonders bevorzugt aus Eisen, Aluminium oder einer Metalllegierung. Ein solches Gehäuse ist dazu geeignet, die Zellanordnung vor äußeren Einwirkungen zu schützen. Das Gehäuse weist vorzugsweise zwei Öffnungen auf, auf welche die Druckplatten aufgesetzt werden. Das Gehäuse kann erfindungsgemäß längliche Aussparungen als Belüftungsschlitze aufweisen.

Weitere vorteilhafte Ausführungsformen der Erfindung sind in den Zeichnungen dargestellt. Dabei zeigt:
Fig. 1 eine schematische Darstellung einer erfindungsgemäßen Platine in einer Ansicht auf eine erste Seite der Platine,
Fig. 2 eine schematische Darstellung der Platine gemäß Fig. 1 in einer Ansicht auf eine zweite Seite der Platine,
Fig. 3 eine schematische Darstellung der Platine gemäß Fig. 1 und 2 mit einer Durchführungsaussparung in einer Schnittansicht,
Fig. 4 eine schematische Darstellung einer Zellanordnung einer erfindungsgemäßen Batterie mit einer Platine,
Fig. 5 eine schematische Darstellung eines Abschnitts der Zellanordnung der Batterie gemäß Fig. 4 in einer Schnittansicht und
Fig. 6 eine schematische Darstellung der Batterie gemäß Fig. 4 und Fig. 5 mit einem Gehäuse.

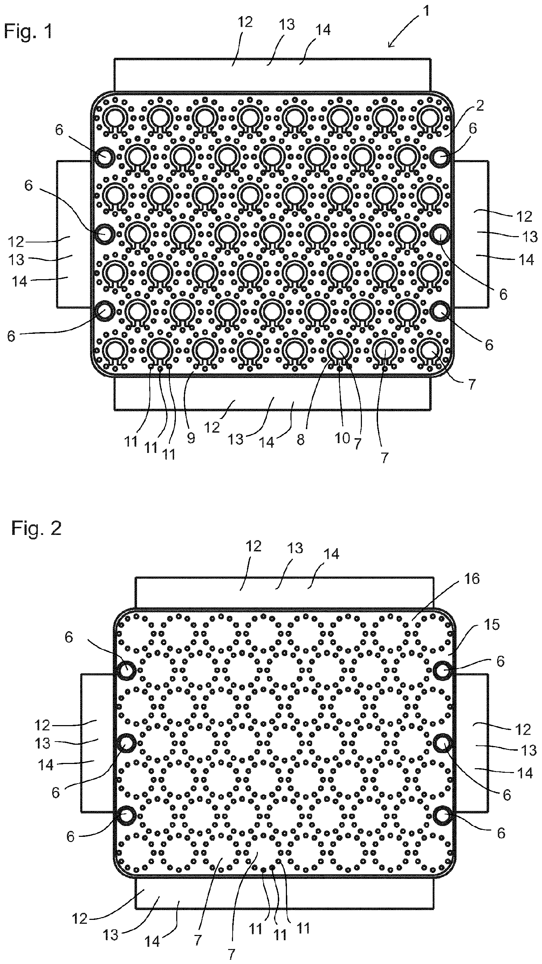

Fig. 1 zeigt eine schematische Darstellung einer erfindungsgemäßen Platine 1 in einer Ansicht auf eine erste Seite 2 der Platine. Es handelt sich vorliegend um eine Platine 1 als Teil einer Zellanordnung 3 mit in ersten Zellebenen 4 und in zweiten Zellebenen 5 versetzt angeordneten Batteriezellen (nicht gezeigt). Die Platine 1 ist hierbei für Zellanordnungen 3 mit sieben ersten und zweiten Zellebenen 4 und 5 geeignet, wobei in den ersten und zweiten Zellebenen 4 und 5 jeweils acht beziehungsweise sieben Batteriezellen (nicht gezeigt) angeordnet sind. Die Platine 1 weist Zugelementaussparungen 6 auf, durch die Zugelemente (nicht gezeigt) hindurchgeführt werden können.

Die Platine 1 ist teilweise aus einem elektrisch nicht leitfähigen Material ausgebildet. Auf das nicht elektrisch leitfähige Material ist auf der ersten Seite der Platine 1 Kupfer als ein elektrisch und thermisch leitfähiges Material flächig aufgebracht. Das Kupfermaterial weist dabei mehrere Kontaktierungsabschnitte 7 auf. Diese sind zur Kontaktierung mit Endanschlüssen von Batteriezellen geeignet. Zu diesem Zweck sind die Kontaktierungsabschnitte 7 erhaben ausgeführt. Die Kontaktierungsabschnitte 7 sind durch Isolierungsabschnitte 8 aus einem nicht elektrisch leitfähigen Material von einem Verbindungsabschnitt 9 getrennt. Der Verbindungsabschnitt 9 ist flächig ausgebildet. Er verbindet die Kontaktierungsabschnitte 7 miteinander elektrisch und thermisch leitfähig. Durch jeden Isolierungsabschnitt 8 ist eine elektrisch und thermisch leitfähige Leiterbahn 10 hindurchgeführt, die als eine Sicherung dimensioniert ist. Hierdurch werden die Kontaktierungsabschnitte 7 gegenüber einander elektrisch gesichert.

Um jeden Isolierungsabschnitt 8 und damit auch um jeden Kontaktierungsabschnitt 7 sind mehrere Durchführungsaussparungen 11 kreisförmig angeordnet. In jeder Durchführungsaussparung 11 ist ein Durchführungselement (nicht gezeigt) angeordnet, das in der Durchführungsaussparung 11 angeordnet ist. Das Durchführungselement ist aus Kupfer ausgeführt und verbindet den Verbindungsabschnitt 9 der ersten Seite 2 der Platine 1 mit einer zweiten Seite (nicht gezeigt) der Platine 1 elektrisch und thermisch leitfähig. Ein aus einer Batteriezelle in einen Kontaktierungsabschnitt 7 fließender Strom kann somit durch die Leiterbahn 10 und den Verbindungsabschnitt zu der zweiten Seite der Platine 1 geführt werden. Da die Kontaktierungsabschnitte 7 auf der ersten Seite 2 der Platine 1 gegenüber dem Verbindungsabschnitt 9 elektrisch gesichert sind, sind sie auch gegenüber nicht gezeigten Kontaktierungsabschnitten auf der zweiten Seite der Platine 1 gesichert.

In der Platine 1 befindet sich ein Kern 12 aus Kupfer, der sich teilweise seitlich in Bereiche außerhalb der Zellanordnung 3 erstreckt. In diesen Bereichen außerhalb der Platine 1 bildet der Kern 12 ein Wärmeabfuhrelement 13. Vorliegend sind vier Wärmeabfuhrelemente 13 mit jeweils einem ersten flächigen Abschnitt 14 dargestellt. An jedem Wärmeabfuhrelement 13 befindet sich auch ein zweiter flächiger Abschnitt, der jedoch aufgrund der gezeigten Perspektive nicht sichtbar ist.

Fig. 2 zeigt eine schematische Darstellung der Platine 1 gemäß Fig. 1 in einer Ansicht auf eine zweite Seite 15 der Platine 1. Auf der zweiten Seite 15 der Platine 1 befindet sich eine als ein Verbindungs- und Kontaktierungsbereich 16 ausgebildete Kupferschicht. In dem Verbindungs- und Kontaktierungsbereich 16 sind Kontaktierungsabschnitte 7 angeordnet, die zur Kontaktierung mit Endanschlüssen von Batteriezellen geeignet sind. Um jeden Kontaktierungsabschnitt 7 sind mehrere Durchführungsaussparungen 11 kreisförmig angeordnet. Nicht gezeigte Durchführungselemente sind in der Platine 1 wie vorangehend beschrieben in den Durchführungsaussparungen 11 angeordnet.

Vorliegend sind ferner die vier Wärmeabfuhrelemente 13 mit jeweils einem ersten flächigen Abschnitt 14 gezeigt. Auch auf der zweiten Seite der Platine 1 sind die Zugelementaussparungen 6 sichtbar, durch die Zugelemente (nicht gezeigt) hindurchgeführt werden können.

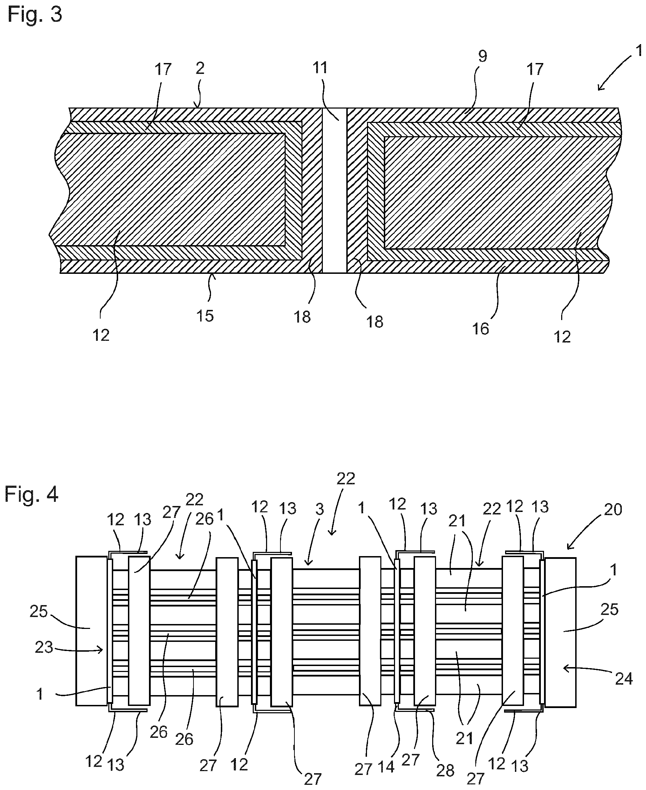

Fig. 3 zeigt eine schematische Darstellung der Platine 1 gemäß Fig. 1 und 2 mit einer Durchführungsaussparung 11 in einer Schnittansicht. Die Platine 1 weist ein elektrisch nicht leitfähiges Substratmaterial 17 auf. Das Substratmaterial 17 umschließt den Kern 12. Auf der ersten Seite 2 der Platine 1 bildet eine Kupferschicht den Verbindungsabschnitt 9. Auf der zweiten Seite 15 der Platine 1 bildet eine Kupferschicht den Verbindungs- und Kontaktierungsbereich 16. Eine Durchführungsaussparung 11 ist durch die Platine 1 hindurchgeführt. Sie durchläuft dabei den Verbindungsabschnitt 9 und den Verbindungs- und Kontaktierungsbereich 16. Auf den Rand der Durchführungsaussparung 11 ist ein Durchführungselement 18 aus Kupfer flächig in einer dünnen Schicht aufgebracht. Das Durchführungselement 18 wird dabei durch das Substratmaterial 17 von dem Kern 12 elektrisch isoliert. Ein thermischer Strom kann jedoch das Substratmaterial 17 durchfließen und durch den Kern 12 aus der Platine 1 abgeführt werden.

Fig. 4 zeigt eine schematische Darstellung einer Zellanordnung 3 einer erfindungsgemäßen Batterie 20 mit einer Platine 1. In der Zellanordnung 3 sind mehrere Batteriezellen 21 jeweils in einem Batterieabschnitt 22 nebeneinander angeordnet. Die in einem Batterieabschnitt 22 angeordneten Batteriezellen 21 sind miteinander parallel verschaltet. Eine parallele Verschaltung der Batteriezellen 21 wird durch mehrere erfindungsgemäße Platinen 1 ermöglicht. Dafür sind Endanschlüsse der Batteriezellen 21 elektrisch und thermisch leitfähig mit den Platinen 1 verbunden. Die Platinen 1 sind jeweils zwischen zwei Batterieabschnitten 22 angeordnet. Jeder Batterieabschnitt 22 weist eine Höhe von sieben Batteriezellen 21 auf. Batteriezellen 21 benachbarter Batterieabschnitte 22 werden durch die zwischen ihnen angeordneten Platinen 1 in Reihe geschaltet. Die Batteriezellen 21 in der Zellanordnung 3 sind somit sowohl parallel als seriell miteinander verschaltet.

Ein Batteriepluspol 23 und ein Batterieminuspol 24 werden durch positive Endanschlüsse beziehungsweise durch negative Endanschlüsse von Batteriezellen 21 in der Batterie 20 gebildet. Der Batteriepluspol 23 und der Batterieminuspol 24 sind mit äußeren Platinen 1 verbunden. Die äußeren Platinen 1 verbinden die Endanschlüsse der Batteriezellen 21 elektrisch und thermisch leitfähig. Auf einer dem Batteriepluspol 23 beziehungsweise dem Batterieminuspol 24 abgewandten Seite der äußeren Platinen 1 ist jeweils eine Druckplatte 25 angeordnet. Die Druckplatte 25 ist aus Kupfer ausgeführt. Somit ist sie besonders gut wärmeleitfähig. Die Druckplatte 25 ist von den äußeren Platinen 1 elektrisch isoliert, sodass sie beim Betrieb der Batterie 20 keinen elektrischen Strom führt.

Die Druckplatten 25 sind durch Zugelemente 26 miteinander verbunden. Die Zugelemente 26 sind dabei solchermaßen mit den Druckplatten 25 verschraubt, dass sie eine Zugkraft auf die Druckplatten 25 ausüben. Dadurch wird die Zellanordnung 3 zusammengedrückt. Insbesondere werden die Batteriezellen 21 an die Platinen 1 gedrückt. Hierdurch wird zwischen den Endanschlüssen der Batteriezellen 21 und den Platinen 1 eine Kontaktfläche vergrößert, sodass ein elektrischer und ein thermischer Strom besser zwischen den Batteriezellen 21 und den Platinen 1 verteilt und damit auch besser über die gesamte Zellanordnung 3 verteilt werden können. Hierdurch werden lokale thermische Hotspots innerhalb der Batterie 20 vermieden. Ferner ist aufgrund der erfindungsgemäßen, durch die Zugelemente 26 und die Druckplatten 25 verpressten Zellanordnung 3 die erfindungsgemäße Batterie 20 besonders widerstandsfähig gegenüber mechanischen Belastungen.

Um zu gewährleisten, dass die Batteriezellen 21 sicher innerhalb der Zellanordnung 3 gehalten werden, sind die Batteriezellen 21 durch mehrere Positionierungsplatten 27 umschlossen. Die Positionierungsplatten 27 umschließen die Batteriezellen 21 in den Batterieabschnitten 22 formschlüssig. Da an den Platinen 1 eine exakte Kontaktierung der Endanschlüsse der Batteriezellen 21 mit den Platinen 1 notwendig ist, sind die Positionierungsplatten 27 vorliegend in der Nähe der Platinen 1 angeordnet.

Die Platinen 1 weisen vorliegend jeweils einen Kern 12 auf, der aus den Platinen 1 seitlich herausgeführt ist. Außerhalb der Platinen 1 bildet der Kern 12 jeweils ein Wärmeabfuhrelement 13. Über das Wärmeabfuhrelement 13 kann Wärme aus der Zellanordnung 3 abgeführt werden. Das Wärmeabfuhrelement 13 weist einen ersten flächigen Abschnitt 14 auf, der in einer Ebene der Platine 1 liegt, sowie einen zweiten flächigen Abschnitt 28, der in einer weiteren Ebene liegt, die in einem rechten Winkel zu der Ebene der Platine 1 ausgerichtet ist. Der zweite flächige Abschnitt 28 ist dazu geeignet, mit einem Gehäuse (nicht gezeigt) oder mit einer Wärmesenke (nicht gezeigt) thermisch leitfähig verbunden zu werden, sodass ein Wärmestrom aus der Platine 1 auf das Gehäuse beziehungsweise auf die Wärmesenke abgeführt werden kann.

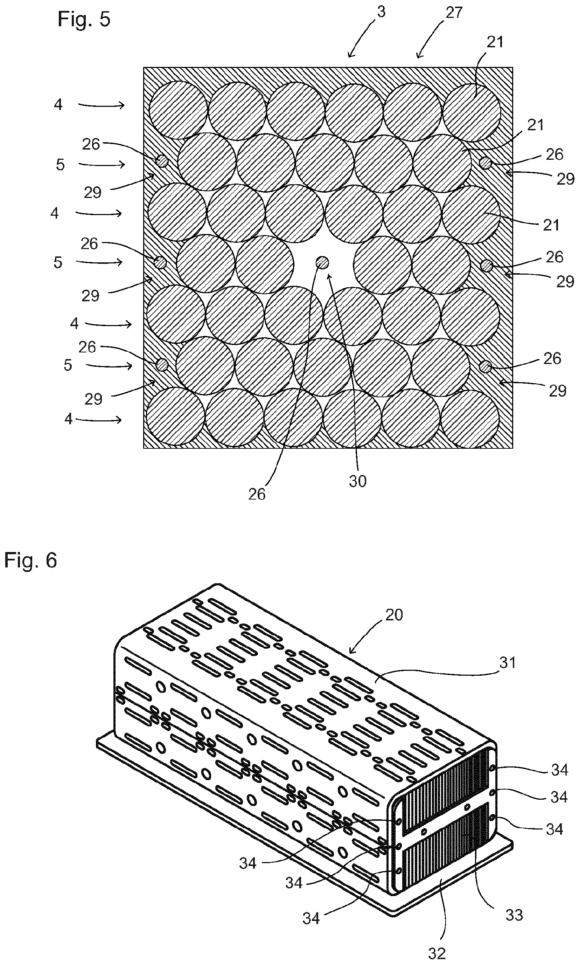

Fig. 5 zeigt eine schematische Darstellung eines Abschnitts der Zellanordnung der Batterie 20 gemäß Fig. 4 in einer Schnittansicht. Dabei sind die Batteriezellen 21 in ersten Zellebenen 4 und zweiten Zellebenen 5 angeordnet. Die Batteriezellen 21 grenzen hierbei unmittelbar aneinander an. Die zweiten Zellebenen 5 weisen jeweils eine Batteriezelle 21 weniger auf als die ersten Zellebenen 4. Hierdurch ergeben sich äußere Durchtrittsabschnitte 29. Durch die äußeren Durchtrittsabschnitte 29 lassen sich Zugelemente 26 hindurchführen. Die äußeren Durchtrittsabschnitte 29 ermöglichen es, möglichst viele Batteriezellen 21 auf einer möglichst geringen Querschnittsfläche einer Zellanordnung 3 anzuordnen. So muss für die Durchführung eines Zugelements 26 in einem Randbereich eines Batterieabschnitts 22 nicht eine gesamte Batteriezelle 21 entfernt werden. Stattdessen wird lediglich aus einer zweiten Zellebene 5 eine Batteriezelle 21 entfernt. Durch die Entfernung der einen Batteriezelle 21 aus der zweiten Zellebene 5 entstehen zwei äußere Durchtrittsabschnitte 29. Durch jeden äußeren Durchtrittsabschnitt 29 können ein oder mehrere Zugelemente 26 hindurchgeführt werden. Vorliegend ist durch jeden äußeren Durchtrittsabschnitt 29 ein Zugelement 26 hindurchgeführt. Um eine gleichmäßige Stabilisierung der Zellanordnung 3 zu erreichen, ist vorliegend jedoch auch ein innerer Durchtrittsabschnitt 30 vorgesehen, in dem keine Batteriezelle 21 angeordnet ist. Durch den inneren Durchtrittsabschnitt 30 ist ein Zugelement 26 hindurchgeführt.

Die Batteriezellen 21 sind in dem Batterieabschnitt 22 durch die Positionierungsplatte 27 umschlossen. In der Positionierungsplatte 27 sind Zugelementaussparungen 6 vorgesehen, durch die die Zugelemente 26 in den äußeren Durchtrittsabschnitten 29 und in den inneren Durchtrittsabschnitt 30 hindurchgeführt sind.

Fig. 6 zeigt eine schematische Darstellung einer erfindungsgemäßen Batterie 20 mit einem Gehäuse 31. Das Gehäuse 31 ist aus Eisen ausgeführt und umschließt eine erfindungsgemäße Zellanordnung 3 mit Platinen 1. Dabei können innerhalb des Gehäuses 31 Wärmeabfuhrelemente 13 mit dem Gehäuse 31 verbunden sein, sodass ein thermischer Strom aus der Zellanordnung 3 auf das Gehäuse 31 abgeführt werden kann. Das Gehäuse 31 ist fest mit einer Halteplatte 32 verbunden, die als Wärmesenke dient. Das Gehäuse 31 wird an zwei Stirnseiten durch Druckplatten 25 verschlossen. Die Druckplatten 25 weisen Kühlrippen 33 auf, sodass die Druckplatten 25 dazu beitragen, die Zellanordnung 3 innerhalb des Gehäuses 31 zu kühlen. Nicht gezeigte Zugelemente 26 sind durch die Druckplatten 25 hindurchgeführt und mittels Muttern 34 mit den Druckplatten 25 verschraubt.

### BEZUGSZEICHENLISTE

- 1.: Platine
- 2.: Erste Seite der Platine
- 3.: Zellanordnung
- 4.: Erste Zellebene
- 5.: Zweite Zellebene
- 6.: Zugelementaussparung
- 7.: Kontaktierungsabschnitt
- 8.: Isolierungsabschnitt
- 9.: Verbindungsabschnitt
- 10.: Leiterbahn
- 11.: Durchführungsaussparung
- 12.: Kern
- 13.: Wärmeabfuhrelement
- 14.: Erster flächiger Abschnitt des Wärmeabfuhrelements
- 15.: Zweite Seite der Platine
- 16.: Verbindungs- und Kontaktierungsbereich
- 17.: Substratmaterial
- 18.: Durchführungselement
- 20.: Batterie
- 21.: Batteriezelle
- 22.: Batterieabschnitt
- 23.: Batteriepluspol
- 24.: Batterieminuspol
- 25.: Druckplatte
- 26.: Zugelement
- 27.: Positionierungsplatte
- 28.: Zweiter flächiger Abschnitt des Wärmeabfuhrelements
- 29.: Äußerer Durchtrittsabschnitt
- 30.: Innerer Durchtrittsabschnitt
- 31.: Gehäuse
- 32.: Halteplatte
- 33.: Kühlrippen
- 34.: Mutter

## Patentansprüche

1. Platine (1) zur elektrisch gesicherten Verbindung von Batteriezellen (21),
wobei die Platine (1) teilweise aus einem nicht elektrisch leitfähigen Material ausgebildet ist,
wobei die Platine (1) auf einer ersten Seite (2) mindestens zwei elektrisch und thermisch leitfähige Kontaktierungsabschnitte (7) und auf einer zweiten Seite (15) mindestens einen elektrisch und thermisch leitfähigen Kontaktierungsabschnitt (7) aufweist, wobei das nicht elektrisch leitfähige Material flächig ausgebildet und zwischen den Kontaktierungsabschnitten (7) angeordnet ist,
wobei auf der ersten Seite (2) ein elektrisch und thermisch leitfähiger Verbindungsabschnitt (9) angeordnet ist, der die Kontaktierungsabschnitte (7) auf der ersten Seite (2) elektrisch und thermisch leitfähig miteinander verbindet, und
wobei den Kontaktierungsabschnitten (7) auf der ersten Seite (2) jeweils eine elektrische Sicherung zugeordnet ist und der Verbindungsabschnitt (9) mit jedem Kontaktierungsabschnitt (7) über eine diesem Kontaktierungsabschnitt (7) zugeordnete elektrische Sicherung verbunden ist,
**dadurch gekennzeichnet, dass**
der Verbindungsabschnitt (9) mit dem mindestens einen Kontaktierungsabschnitt (7) auf der zweiten Seite (15) der Platine (1) durch das nichtleitende Material der Platine (1) hindurch elektrisch leitfähig über mindestens ein elektrisch leitfähiges Durchführungselement (18) verbunden ist, sodass jeder Kontaktierungsabschnitt (7) auf der ersten Seite (2) der Platine gegenüber jedem anderen Kontaktierungsabschnitt (7) auf der ersten Seite (2) der Platine (1) und gegenüber jedem Kontaktierungsabschnitt (7) auf der zweiten Seite der Platine (1) durch mindestens eine elektrische Sicherung gesichert ist.

2. Platine (1) nach Anspruch 1,
**dadurch gekennzeichnet, dass** jeder
Kontaktierungsabschnitt (7) auf der ersten Seite der Platine (1) über einen nicht elektrisch leitfähigen Abschnitt auf der ersten Seite der Platine (1) von dem Verbindungsabschnitt (9) getrennt und durch eine durch den nicht elektrisch leitfähigen Abschnitt hindurchgeführte Leiterbahn (10) mit dem Verbindungsabschnitt (9) verbunden ist,
wobei die Leiterbahn (10) so dimensioniert ist, dass die Leiterbahn (10) als die dem jeweiligen Kontaktierungsabschnitt (7) zugeordnete Sicherung dient.

3. Platine (1) nach einem der vorhergehenden Ansprüche,
**dadurch gekennzeichnet, dass**
der Verbindungsabschnitt (9) als eine flächige, elektrisch und thermisch leitfähige Schicht auf der ersten Seite (2) der Platine (1) ausgebildet ist.

4. Platine (1) nach einem der Ansprüche 1 oder 2,
**dadurch gekennzeichnet, dass**
der Verbindungsabschnitt (9) als ein Verbund von Leiterbahnen ausgebildet ist, die miteinander elektrisch und thermisch leitfähig verbunden sind.

5. Platine (1) nach Anspruch 4,
**dadurch gekennzeichnet, dass**
jede Leiterbahn als eine einen Kontaktierungsabschnitt (7) umschließende, geschlossene Leiterschleife ausgebildet ist.

6. Platine (1) nach einem der vorhergehenden Ansprüche,
**dadurch gekennzeichnet, dass**
der mindestens eine Kontaktierungsabschnitt (7) auf der zweiten Seite (15) der Platine (1) in einem flächigen, elektrisch und thermisch leitfähigen Verbindungs- und Kontaktierungsbereich (16) auf der zweiten Seite der Platine (1) angeordnet ist.

7. Platine (1) nach Anspruch 6,
**dadurch gekennzeichnet, dass**
der Verbindungsabschnitt (9) auf der ersten Seite mit dem Verbindungs- und Kontaktierungsbereich (16) auf der zweiten Seite durch das elektrisch nicht leitfähige Material hindurch verbunden ist.

8. Platine (1) nach einem der vorhergehenden Ansprüche,
**dadurch gekennzeichnet, dass**
um jeden Kontaktierungsabschnitt (7) auf der ersten Seite (2) mehrere Durchführungselemente (18) gleichmäßig von dem Kontaktierungsabschnitt (7) beabstandet angeordnet sind.

9. Platine (1) nach einem der vorhergehenden Ansprüche,
**dadurch gekennzeichnet, dass**
das mindestens eine Durchführungselement (18) auf einem Innenrand einer Durchführungsaussparung (11) angeordnet ist, die das nicht leitfähige Material durchläuft.

10. Platine (1) nach einem der vorhergehenden Ansprüche,
**dadurch gekennzeichnet, dass**
die Kontaktierungsabschnitte (7) auf der ersten Seite und/oder auf der zweiten Seite (15) der Platine (1) gegenüber einer Ebene, die durch eine Oberfläche der ersten Seite (2) beziehungsweise der zweiten Seite (15) der Platine (1) definiert wird, erhaben ausgebildet sind.

11. Platine (1) nach einem der vorhergehenden Ansprüche,
**dadurch gekennzeichnet, dass**
die Kontaktierungsabschnitte (7) erhabene Kontaktierungspunkte aufweisen.

12. Platine (1) nach einem der vorhergehenden Ansprüche,
**dadurch gekennzeichnet, dass**
die Platine (1) flexibel ausgebildet ist.

13. Platine (1) nach einem der vorhergehenden Ansprüche,
**dadurch gekennzeichnet, dass**
die Platine (1) in dem nicht leitfähigen Material einen flächig ausgebildeten Kern (12) aus einem elektrisch und thermisch leitfähigen Material aufweist, wobei sich das Durchführungselement (18) durch den Kern (12) erstreckt und gegenüber dem Kern (12) elektrisch isoliert ist, sodass eine elektrisch und thermisch leitfähige Verbindung der Kontaktierungsabschnitte (7) auf der ersten Seite mit den Kontaktierungsabschnitten (7) auf der zweiten Seite durch das Durchführungselement (18) hergestellt wird und ein Wärmestrom durch den Kern (12) aufgenommen und aus der Platine (1) abgeführt werden kann.

14. Platine (1) nach Anspruch 13,
**dadurch gekennzeichnet, dass**
der Kern (12) aus einer Kante der Platine (1) herausgeführt ist oder an dieser freiliegt.

15. Batterie (20) mit einer Zellanordnung (3),
wobei die Zellanordnung (3) mehrere Batteriezellen (21) aufweist, die in einer elektrischen und thermischen Reihen- und Parallelschaltung elektrisch und thermisch leitfähig miteinander verbunden sind, wobei die Zellanordnung (3) mindestens zwei Batterieabschnitte (22) aufweist und jeder Batterieabschnitt (22) aus mehreren elektrisch parallel geschalteten Batteriezellen (21) besteht, wobei jede Batteriezelle (21) einen positiven und einen negativen Endanschluss aufweist, wobei die Batteriezellen (21) der Batterieabschnitte (22) so ausgerichtet sind, dass sämtliche positiven Endanschlüsse der Batteriezellen (21) des jeweiligen Batterieabschnitts (22) in einer gemeinsamen positiven Kontaktierungsebene liegen und dass sämtliche negativen Endanschlüsse der Batteriezellen (21) des jeweiligen Batterieabschnitts (22) in einer gemeinsamen negativen Kontaktierungsebene liegen, wobei die Batterieabschnitte (22) benachbart zueinander angeordnet sind, wobei jeweils eine positive Kontaktierungsebene eines Batterieabschnitts (22) einer negativen Kontaktierungsebene eines benachbart angeordneten Batterieabschnitts (22) zugewandt ist und wobei die Kontaktierungsebenen parallel zueinander ausgerichtet sind, wobei zwischen mindestens zwei aufeinanderfolgenden Batterieabschnitten (22) eine zumindest teilweise elektrisch und thermisch leitfähige Verbindungsplatte mit einer ersten Seite (2) und einer zweiten Seite (15) angeordnet ist, die auf der ersten Seite (2) und auf der zweiten Seite (15) jeweils elektrisch und thermisch leitfähige Kontaktierungsabschnitte (7) aufweist, wobei die mit den Kontaktierungsabschnitten (7) der ersten Seite (2) verbundenen Endanschlüsse untereinander über die Verbindungsplatte elektrisch und thermisch leitfähig miteinander verbunden sind, wobei die mit den Kontaktierungsabschnitten (7) der zweiten Seite (15) verbundenen Endanschlüsse untereinander über die Verbindungsplatte elektrisch und thermisch leitfähig miteinander verbunden sind, und wobei die mit den Kontaktierungsabschnitten (7) der ersten Seite (2) verbundenen Endanschlüsse elektrisch und thermisch leitfähig mit den mit den Kontaktierungsabschnitten (7) der zweiten Seite (15) verbundenen Endanschlüssen über die Verbindungsplatte verbunden sind,
**dadurch gekennzeichnet, dass**
die Verbindungsplatte als eine Platine (1) nach einem der Ansprüche 1 bis 14 ausgebildet ist.

## Claims

1. Board (1) for electrically secured connection of battery cells (21),
wherein the board (1) is formed in part from an electrically non-conductive material,
wherein the board (1) has at least two electrically and thermally conductive contacting sections (7) on a first side (2) and at least one electrically and thermally conductive contacting section (7) on a second side (15), wherein the electrically non-conductive material is planar and arranged between the contacting sections (7),
wherein on the first side (2), an electrically and thermally conductive connecting section (9) is arranged, which electrically and thermally conductively connects the contacting sections (7) on the first side (2) to one another, and wherein an electrical fuse is assigned to each of the contacting sections (7) on the first side (2) and the connecting section (9) is connected to each contacting section (7) via an electrical fuse assigned to this contacting section (7),
**characterized in that**
the connecting section (9) is electrically conductively connected to the at least one contacting section (7) on the second side (15) of the board (1) through the non-conductive material of the board (1) via at least one electrically conductive lead-through element (18), such that each contacting section (7) on the first side (2) of the board is secured against each other contacting section (7) on the first side (2) of the board (1) and against each contacting section (7) on the second side of the board (1) by at least one electrical fuse.

2. Board (1) according to claim 1,
**characterized in that**
each contacting section (7) on the first side of the board (1) is separated from the connecting section (9) by an electrically non-conductive section on the first side of the board (1) and is connected to the connecting section (9) by a conductor track (10) passing through the electrically non-conductive section, wherein the conductor track (10) is dimensioned such that the conductor track (10) serves as the fuse assigned to the respective contacting section (7).

3. Board (1) according to one of the preceding claims,
**characterized in that**
the connecting section (9) is formed as a planar, electrically and thermally conductive layer on the first side (2) of the board (1).

4. Board (1) according to one of claims 1 or 2,
**characterized in that**
the connecting section (9) is formed as a composite of conductor tracks, which are electrically and thermally conductively connected to one another.

5. Board (1) according to Claim 4,
**characterized in that**
each conductor track is formed as a closed conductor loop enclosing a contacting section (7).

6. Board (1) according to one of the preceding claims,
**characterized in that**
the at least one contacting section (7) on the second side (15) of the board (1) is arranged in a planar, electrically and thermally conductive connecting and contacting region (16) on the second side of the board (1).

7. Board (1) according to claim 6,
**characterized in that**
the connecting section (9) on the first side is connected to the connecting and contacting region (16) on the second side through the electrically non-conductive material.

8. Board (1) according to one of the preceding claims,
**characterized in that**
around each contacting section (7) on the first side (2), a plurality of lead-through elements (18) are arranged uniformly spaced apart from the contacting section (7).

9. Board (1) according to one of the preceding claims,
**characterized in that**
the at least one lead-through element (18) is arranged on an inner edge of a lead-through recess (11) which passes through the non-conductive material.

10. Board (1) according to one of the preceding claims,
**characterized in that**
the contacting sections (7) on the first side and/or on the second side (15) of the board (1) are elevated with respect to a plane defined by a surface of the first side (2) or the second side (15) of the board (1), respectively.

11. Board (1) according to one of the preceding claims,
**characterized in that**
the contacting sections (7) have elevated contacting points.

12. Board (1) according to one of the preceding claims,
**characterized in that**
the board (1) is flexible.

13. Board (1) according to one of the preceding claims,
**characterized in that**
the board (1) has, in the non-conductive material, a planar core (12) made of an electrically and thermally conductive material,
wherein the lead-through element (18) extends through the core (12) and is electrically insulated from the core (12), such that an electrically and thermally conductive connection of the contacting sections (7) on the first side with the contacting sections (7) on the second side is made by the lead-through element (18) and a heat flow can be absorbed by through the core (12) and dissipated from the board (1).

14. Board (1) according to claim 13,
**characterized in that**
the core (12) is led out of an edge of the board (1) or is exposed on the edge.

15. Battery (20) comprising a cell arrangement (3),
wherein the cell arrangement (3) comprises a plurality of battery cells (21), which are electrically and thermally conductively connected to one another in an electrical and thermal series and parallel circuit,
wherein the cell arrangement (3) comprises at least two battery sections (22), each battery section (22) consisting of a plurality of battery cells (21) electrically connected in parallel,
wherein each battery cell (21) has a positive and a negative end terminal,
wherein the battery cells (21) of the battery sections (22) are aligned such that all the positive end terminals of the battery cells (21) of the respective battery section (22) lie in a common positive contact plane, and such that all the negative end terminals of the battery cells (21) of the respective battery section (22) lie in a common negative contact plane,
wherein the battery sections (22) are arranged adjacent to one another,
wherein a positive contact plane of a battery section (22) faces in each case a negative contact plane of an adjacently arranged battery section (22), and
wherein the contact planes are aligned parallel to one another,
wherein an at least partially electrically and thermally conductive connecting plate with a first side (2) and a second side (15) is arranged between at least two successive battery sections (22), which has on the first side (2) and on the second side (15) in each case thermally and electrically conductive contacting sections (7),
wherein the end terminals connected to the contacting sections (7) of the first side (2) are electrically and thermally conductively connected to one another via the connecting plate,
wherein the end terminals connected to the contacting sections (7) of the second side (15) are electrically and thermally conductively connected to one another via the connecting plate, and
wherein the end terminals connected to the contacting sections (7) of the first side (2) are electrically and thermally conductively connected via the connecting plate to the end terminals connected to the contacting sections (7) of the second side (15),
**characterized in that**
the connecting plate is configured as a board (1) according to one of claims 1 to 14.

## Revendications

1. Carte de circuit (1) pour le raccordement électriquement sécurisé des éléments de batterie (21),
dans lequel la carte de circuit (1) est en partie formée d'un matériau non électriquement conducteur,
dans lequel la carte de circuit (1) comporte sur un premier côté (2) au moins deux sections de contact (7) électriquement et thermiquement conductrices et sur un deuxième côté (15) au moins une section de contact (7) électriquement et thermiquement conductrice, dans lequel le matériau non électriquement conducteur est formé de manière plate et est disposé entre les sections de contact (7),
dans lequel une section de connexion (9) électriquement et thermiquement conductrice est disposée sur le premier côté (2), qui connecte les sections de contact (7) sur le premier côté (2) entre elles de manière électriquement et thermiquement conductrice, et
dans lequel un fusible électrique est associé à chacune des sections de contact (7) sur le premier côté (2) et la section de connexion (9) est connectée à chaque section de contact (7) via un fusible électrique associé à cette section de contact (7),
**caractérisé en ce que**
la section de connexion (9) est connectée de manière électriquement conductrice à la au moins une section de contact (7) sur le deuxième côté (15) de la carte de circuit (1) à travers le matériau non conducteur de la carte de circuit (1) par l'intermédiaire d'au moins un élément de traversée électriquement conductrice (18), de sorte que chaque section de contact (7) sur le premier côté (2) de la carte de circuit est sécurisée contre chaque autre section de contact (7) sur le premier côté (2) de la carte de circuit (1) et contre chaque section de contact (7) sur le deuxième côté de la carte de circuit (1) par au moins un fusible électrique.

2. Carte de circuit (1) selon la revendication 1,
**caractérisé en ce que**
chaque section de contact (7) sur le premier côté de la carte de circuit (1) est séparée de la section de connexion (9) par une partie non électriquement conductrice sur le premier côté de la carte de circuit (1) et est connectée à la section de connexion (9) par une piste conductrice passant à travers la partie non électriquement conductrice,
dans lequel la piste conductrice (10) est dimensionnée de telle sorte que la piste conductrice (10) sert de fusible associé à la section de contact respective (7).

3. Carte de circuit (1) selon l'une quelconque des revendications précédentes,
**caractérisé en ce que**
la section de connexion (9) est formée d'une couche plate, électriquement et thermiquement conductrice, sur le premier côté (2) de la carte de circuit (1).

4. Carte de circuit (1) selon l'une quelconque des revendications 1 ou 2,
**caractérisé en ce que**
la section de connexion (9) est formée comme un composite des pistes conductrices qui sont connectées entre elles de manière électriquement et thermiquement conductrice.

5. Carte de circuit (1) selon la revendication 4,
**caractérisé en ce que**
chaque piste conductrice est formée comme une boucle conductrice fermée entourant une section de contact (7).

6. Carte de circuit (1) selon l'une quelconque des revendications précédentes,
**caractérisé en ce que**
la au moins une section de contact (7) sur le deuxième côté (15) de la carte de circuit (1) est disposée dans une zone de connexion et de contact (16) plate, électriquement et thermiquement conductrice, sur le deuxième côté de la carte de circuit (1).

7. Carte de circuit (1) selon la revendication 6,
**caractérisé en ce que**
la section de connexion (9) sur le premier côté est connectée à la zone de connexion et de contact (16) sur le deuxième côté à travers le matériau non électriquement conducteur.

8. Carte de circuit (1) selon l'une quelconque des revendications précédentes,
**caractérisé en ce que**
autour de chaque section de contact (7) sur le premier côté (2), une pluralité d'éléments de traversée (18) sont disposés à distance égale de la section de contact (7).

9. Carte de circuit (1) selon l'une des demandes revendications,
**caractérisé en ce que**
le au moins un élément de traversée (18) est disposé sur un bord intérieur d'un renfoncement de traversée (11), qui traverse le matériau non conducteur.

10. Carte de circuit (1) selon l'une quelconque des revendications précédentes,
**caractérisé en ce que**
les sections de contact (7) sur le premier côté et/ou sur le deuxième côté (15) de la carte de circuit (1) sont formées élevés par rapport à un plan défini par une surface du premier côté (2) ou du deuxième côté (15) de la carte de circuit (1), respectivement.

11. Carte de circuit (1) selon l'une quelconque des revendications précédentes,
**caractérisé en ce que**
les sections de contact (7) comportent des points de contact élevés.

12. Carte de circuit (1) selon l'une quelconque des revendications précédentes,
**caractérisé en ce que**
la carte de circuit (1) est flexible.

13. Carte de circuit (1) selon l'une quelconque des revendications précédentes,
**caractérisé en ce que**
la carte de circuit (1) comporte, dans le matériau non conducteur, un noyau plat (12) en un matériau électriquement et thermiquement conducteur,
dans lequel l'élément de traversée (18) s'étende à travers le noyau (12) et est électriquement isolé du noyau (12), de sorte qu'une connexion électriquement et thermiquement conductrice des sections de contact (7) sur le premier côté avec les sections de contact (7) sur le deuxième côté est établie par l'élément de traversée (18) et qu'un flux de chaleur peut être absorbé par le noyau (12) et dissipé de la carte de circuit (1).

14. Carte de circuit (1) selon la revendication 13,
**caractérisé en ce que**
le noyau (12) est sorti d'un bord de la carte du circuit (1) ou est exposé à ce bord.

15. Batterie (20) comprenant un assemblage de cellules (3),
dans lequel l'assemblage de cellules (3) comprends une pluralité de cellules de batterie (21), qui sont connectées électriquement et thermiquement en série et en parallèle, dans lequel l'assemblage de cellules (3) comprends au moins deux sections de batterie (22) et chaque section de batterie (22) consiste en une pluralité de cellules de batterie (21) connectées électriquement en parallèle, dans lequel chaque cellule de batterie (21) comporte un raccordement d'extrémité positif et un raccordement d'extrémité négatif, dans lequel les cellules de batterie (21) des sections de batterie (22) sont alignées de telle façon que tous les raccordements d'extrémité positives des éléments de batterie (21) de la section de batterie (22) respective sont situés dans un plan de contact positif commun et que tous les raccordements d'extrémité négatives des éléments de batterie (21) de la section de batterie (22) respective sont situés dans un plan de contact négatif commun, dans lequel les sections de batterie (22) sont disposées de manière adjacente les unes aux autres, dans lequel un plan de contact positif d'une section de batterie (22) fait face à chaque fois à un plan de contact négatif d'une section de batterie (22) adjacente et dans lequel les plans de contact sont alignés parallèlement les uns aux autres, dans lequel une plaque de connexion au moins partiellement électriquement et thermiquement conductrice avec un premier côté (2) et un deuxième côté (15) est disposée entre au moins deux sections de batterie (22) successives, laquelle plaque de connexion comporte des sections de contact (7) électriquement et thermiquement conductrices sur le premier côté (2) et sur le deuxième côté (15) respectivement, dans lequel les raccordements d'extrémité connectées aux sections de contact (7) du premier côté (2) sont connectées entre elles de manière électriquement et thermiquement conductrice par l'intermédiaire de la plaque de connexion, dans lequel les raccordements d'extrémité connectées aux sections de contact (7) du deuxième côté (15) sont connectées entre elles de manière électriquement et thermiquement conductrice par l'intermédiaire de la plaque de connexion, et dans lequel les raccordements d'extrémité connectées aux sections de contact (7) du premier côté (2) sont connectées de manière électriquement et thermiquement conductrice par l'intermédiaire de la plaque de connexion aux raccordements d'extrémité connectées aux sections de contact (7) du deuxième côte (15),
**caractérisé en ce que**
la plaque de connexion est configurée comme une carte de circuit (1) selon l'une quelconque des revendications 1 à 14.
